# FASCICULE DE BREVET EUROPEEN

(11) **EP 2 350 599 B1**
(45) Date de publication et mention de la délivrance du brevet: **27.03.2013**
(21) Numéro de dépôt: 09753144.6
(22) Date de dépôt: 27.10.2009
(51) Int. Cl.: G01M 3/20, B65G 5/00, E21B 47/10, G01N 15/08

(54) **SURVEILLANCE GEOCHIMIQUE D´UN STOCKAGE GEOLOGIQUE DE CO2 A L´AIDE DE RAPPORTS CHIMIQUES DE GAZ RARES ASSOCIES**
GEOCHEMISCHE ÜBERWACHUNG EINER GEOLOGISCHEN CO2-LAGERSTÄTTE ANHAND VON EDELGASVERHÄLTNISSEN
GEOCHEMICAL MONITORING OF A GEOLOGICAL CO2 STORAGE SITE USING RARE-GAS RATIOS

(30) Priorité: 31.10.2008 FR 0806061
(43) Date de publication de la demande: 03.08.2011
(73) Titulaire: IFP Energies nouvelles, 92852 Rueil-Malmaison Cedex (FR); IPGP, 75252 Paris Cedex 05 (FR)
(72) Inventeur: PRINZHOFER, Alain, F-75011 Paris (FR); GIANNESINI, Sophie, F-92210 Saint Cloud (FR); MAGNIER, Clotilde, F-75011 Paris (FR); MOREIRA, Manuel, F-94800 Villejuif (FR)
(86) Numéro de dépôt international: PCT/FR2009/001252
(87) Numéro de publication internationale: WO 2010/049608

(56) Documents cités:
- NIMZ, GJ; HUDSON, GB: "The Use of Noble Gas Isotopes for Monitoring Leakage of Geologically Stored CO2" CARBON DIOXIDE CAPTURE FOR STORAGE IN DEEP GEOLOGIC FORMATIONS, vol. 2, 2005, pages 1113-1128, XP008107303 Elsevier Science, Amsterdam
- WILKINSON, M; GILFILLAN, SMV; HASZELDINE, RS; BALLENTINE, CJ: "Plumbing the depths - testing natural tracers of subsurface CO2 origin and leakage, Utah, USA" AAPG SPECIAL PUBLICATION ON CO2 SEQUESTRATION, EDITED BY GROSSE, M., 15 janvier 2007 (2007-01-15), XP002530970
- DUNCAN, I: "Measurement, monitoring and verification" CO2 SEQUESTRATION: OPPORTUNITIES FOR WYOMING, 4 avril 2007 (2007-04-04), XP002530969 Symposium, Cheyenne, Wyoming, USA
- GIANNESINI, S; PRINZHOFER, A; MOREIRA, M; MAGNIER, C: "Tracking CO2 leakage with noble gases" GEOCHIMICA ET COSMOCHIMICA ACTA, vol. 71, no. 15/Supplement-1, août 2007 (2007-08), page A321, XP002530967
- MACKINTOSH, SJ; BALLENTINE, CJ; GAWTHORPE, R: "The use of noble gases as a tracer in carbon dioxide sequestration" GEOCHIMICA ET COSMOCHIMICA ACTA, vol. 70, no. 18/supplement-1, 22 août 2006 (2006-08-22), page A361, XP002530971
- KENNEDY, BM; VAN SOEST, T: "Development of Isotope Techniques for Reservoir and Aquifer Characterization" MULTISCALE RESERVOIR INVESTIGATIONS AND APPLICATIONS TO TERRESTRIAL CO2 SEQUESTRATION, 7 décembre 2001 (2001-12-07), page 7, XP002530968 Symposium, Lawrence Berkeley National Laboratory, USA

## Description

La présente invention concerne le domaine de la séquestration des émissions anthropogéniques de CO₂ qui représente une des préoccupations sociétales les plus importantes de ce début de siècle, avec comme objectif majeur de limiter les émissions atmosphériques de CO₂, les changements climatiques associés, ainsi que l'acidification des océans.

La principale solution considérée est le stockage géologique en sous-sol. Ceci implique plusieurs prérogatives d'admission, techniques et légales, de la qualité du stockage. Les possibles risques liés au large volume injecté de gaz acides sous des zones habitables et/ou des aquifères d'alimentation en eau potable doivent en effet être minimaux. La question principale, pour être accepté par la société, de ce type de stockage géologique sera la définition de types de surveillance des gaz acides stockés à la fois précis et pratiques.

La surveillance géophysique est une des options étudiées, avec les images spectaculaires du stockage de SLEIPNER en mer du Nord. Cependant, si cette technique fournit de façon convaincante, avec une relative bonne précision, la position et la taille des différentes phases (gaz et eau), une contamination de l'eau par une fuite insinuante du gaz stocké est encore mal visible, sans la formation d'une phase gaz.

La surveillance géochimique est une solution alternative pour la surveillance directe des migrations de gaz ascendantes ou latérales, c'est-à-dire par des puits de contrôle dans les aquifères sus-jacents. Un des nombreux problèmes avec le CO₂ est la concentration élevée et hétérogène de son bruit de fond dans les fluides sédimentaires, générés par diverses sources: par exemple décomposition des carbonates, fluides mantelliques, activité bactérienne, sous-produits de systèmes pétroliers.

L'objet de la présente invention porte sur une méthode de surveillance géochimique d'un stockage géologique de CO₂. Son principe est fondé sur l'utilisation des rapports de concentrations de gaz rares présents dans un aquifère sus-jacent au stockage de CO₂, où la signature initiale en gaz rares est fortement perturbée par une contamination de CO₂ fuyant dans cet aquifère. Un principe similaire est connu de Nimz et al. Carbon Dioxide Capture for Storage in Deep Geologic Formations, Volume 2, Chapter 24, Elsevier (2005). Une quantification de la proportion de CO₂ ayant contaminé l'aquifère est possible, avec une sensibilité de quantification permettant d'atteindre une mesure d'environ 0,1% du CO₂ stocké ayant fui dans l'aquifère.

Ainsi, la présente invention concerne une méthode de surveillance d'un stockage géologique de CO₂, dans laquelle on effectue les étapes suivantes:
- on analyse les teneurs en CO₂ et en gaz rares contenus dans un aquifère géologique surmontant la couverture d'un futur stockage de CO₂,
- on analyse les teneurs en gaz rares associés au CO₂ injecté,
- on caractérise les roches constituant ladite couverture et on modélise une fuite de CO₂ et de gaz rares provenant du stockage et traversant la couverture vers ladite couche géologique supérieure,
- on détermine un seuil d'au moins un rapport de gaz rares correspondant à un taux de fuite de CO₂,
- on mesure un rapport de gaz rares présent dans la couche géologique surmontant ledit stockage, et on compare audit seuil, et on détermine le taux de fuite de CO₂.

Selon la méthode, on peut utiliser au moins l'un des ratios de gaz rares suivants: He/Ne ou Ne/Kr.

Les roches de la couverture peuvent être caractérisées en cours de forage d'un puits d'injection de CO₂.

Le CO₂ est une espèce chimique réactive, dont les proportions dans les milieux naturels sont contrôlées par de nombreux phénomènes physico-chimiques complexes. Les gaz rares sont en revanche des espèces complètement inertes chimiquement. Les concentrations de CO₂ en solution dans l'eau d'une roche sédimentaire ne peuvent donc pas être utilisées de manière fiable pour caractériser son origine. La surveillance ("monitoring") d'un stockage de CO₂ (en particulier, les proportions de CO₂ dans un aquifère sus-jacent) ne peut pas être réalisée en mesurant simplement les teneurs en CO₂, bien trop variables par des phénomènes autres que la fuite du stockage. En revanche, les gaz rares associés ne proviennent que de réservoirs simples et bien caractérisés, et peuvent fournir un moyen absolu de caractériser un taux de fuite.

Les proportions naturelles de gaz rares (He, Ne, Ar, Kr, Xe) en solution dans les aquifères sont bien quantifiées. Elles sont faibles, et correspondent à la mise en solution des gaz rares atmosphériques dans l'eau au niveau des zones de recharge des aquifères. Les proportions de gaz rares associées au CO₂ injecté sont beaucoup plus grandes, et peuvent être considérées comme ayant des proportions relatives atmosphériques. Les rapports entre gaz rares de ces deux sources sont différents (différence de solubilité), mais de manière modeste. En revanche, une fuite de CO₂ au travers d'une roche-couverture va induire une fuite des gaz rares associés extrêmement fractionnée, du fait des propriétés physiques variées des divers gaz rares (solubilité dans l'eau, diffusion dans l'eau, adsorption sur les minéraux). C'est ce fractionnement lié à la dynamique de fuite qui est au coeur de cette invention, permettant d'avoir une sensibilité très grande sur de faibles taux de fuite de CO₂ en utilisant simplement les rapports chimiques des gaz rares associés. L'adjonction au CO₂ injecté d'un gaz rare isotopiquement anormal permettrait d'augmenter encore la sensibilité de cette méthode.

On peut décrire ci-après un des modes de réalisation de la présente invention:
- Échantillonnage et analyse du taux de CO₂ et des concentrations en gaz rares avant injection de CO₂ d'un aquifère surmontant un site de stockage prévu.
- Échantillonnage des roches couvertures du site de stockage, et études expérimentales des flux relatifs de gaz rares au travers de ces roches. Cette étude peut être remplacée par l'utilisation de paramètres issus d'une bibliothèque, pour une minéralogie donnée. Il est cependant nécessaire de caractériser la minéralogie de la couverture concernée, ce qui est généralement fait en cours de forage.
- Échantillonnage et analyse des gaz rares en solution dans l'aquifère sus-jacent avec une périodicité à déterminer en fonction des résultats géologiques précédemment acquis.
- Détermination de « seuil d'alerte » de rapports de certaines molécules de gaz rares, par exemple les rapports He/Ne ou Ne/Kr permettant de caractériser et de quantifier un taux de fuite anormal dans l'aquifère.

La présente invention sera mieux comprise et ses avantages apparaîtront plus clairement à la lecture de la description suivante, illustrée par les figures ci-après annexées, parmi lesquelles:
- la figure 1 représente une modélisation d'un réservoir de stockage CO₂,
- les figures 2a et 2b montrent les évolutions des rapports de gaz rares en fonction d'une fuite de CO₂.

La description ci-après est focalisée sur les proportions des gaz rares associés, afin de les utiliser comme des traceurs inertes, avec des proportions initiales dans les réservoirs naturels bien connues (aquifères équilibrés avec l'air, CO₂ généré et capturé dans l'atmosphère). Leur totale inertie chimique permet leur utilisation comme traceurs de fuites, sans interférences possibles avec quelque néoformation de minéraux. La principale question réside dans l'obtention de paramètres fiables sur les flux de migration différentiels des gaz rares et du CO₂ dans les roches sédimentaires, ceci afin de chiffrer un modèle quantitatif de fuite de gaz. En fait, les coefficients de diffusion et de solubilité dans l'eau sont bien connus dans une phase aqueuse simple *(*Crovetto, R., Fernandez-Prini, R. & Japas, M.L. "Solubilities of inert gases and methane in H2O and in D2O in the temperature range of 300 to 600K". J. Chem. Phys. 76, 1077-1086 (1982*) -* Jähne, B., Heinz, G. & Dietrich, W. "Measurement of the diffusion coefficient of sparingly soluble gases in water". J. Geophys. Res. 92, 10, 767-10, 776 (1987*)*)*,* mais on sait que la diffusion au travers des milieux poreux présente des flux de migration très différents, contrôlés par la porosité et un facteur de ralentissement (Slowing Down Factor SDF) (Schömer, S & Krooss, B.M. "Experimental characterisation of the hydrocarbon sealing e fficiency of cap rocks ". Marine and Petrol. Geol. 14, n° 5, 565-580 (1997*) -* Prinzhofer, A. & Pernaton, E. "Isotopically light methane in natural gases: bacterial imprint or segregative migration?" Chemical Geology 142, 193-200 (1997*)*)*.*

Le SDF est contrôlé par un paramètre géométrique (tortuosité) et des facteurs physiques (adsorption/désorption des espèces gazeuses sur les surfaces minérales). Si la tortuosité peut être considérée comme indépendante du composé gazeux, les interactions avec les minéraux peuvent être complètement différentes d'un composé gazeux à l'autre. Afin de quantifier cette méthodologie, on a conçu une expérience de fuite d'une phase gaz composée de CO₂ associé à des traces de gaz rares (hélium, néon, argon et krypton). Les rendements de migration de ces cinq composés gazeux ont été quantifiés. Les résultats expérimentaux ont été interprétés par un modèle numérique, puis extrapolés à un exemple géologique artificiel de stockage de CO₂. L'avantage de la méthode est l'absence d'extrapolation de temps de l'expérience au cas naturel, alors qu'il est contrôlé par la relation des flux de gaz rares en fonction des flux de CO₂. L'objectif est de définir des rapports de concentrations de gaz rares pertinents afin de quantifier des fuites représentatives de CO₂. La différence entre les signatures de gaz rares dans les deux réservoirs (aquifère équilibré avec l'air et gaz rares atmosphériques associés au CO₂) est modeste, mais le fractionnement lors de la migration de gaz induit une augmentation prononcée des valeurs des rapports de gaz rares, atteignant les valeurs des deux réservoirs d'une façon non monotone. Il apparaît que des traces de CO₂ qui ont fui impliquent de forts fractionnements des rapports des gaz rares, indépendamment du temps de fuite. Ce qui donne une façon fiable et quantitative de tracer les fuites de CO₂ en utilisant des traceurs naturels associés.

### Expériences et résultats

Un dispositif expérimental pour la migration de gaz à travers les roches poreuses saturées a été conçu pour quantifier les flux des différentes espèces gazeuses et les fractionnements isotopiques associés. Le gaz étudié est placé d'un côté du dispositif expérimental (sous environ 6 à 7 bars, à température ambiante), et séparé d'un autre gaz utilisé comme contre pression (O₂) par une roche poreuse saturée, réalisée à partir d'une poudre compactée, ou d'une roche naturelle. La migration de CO₂ et des traces de gaz rares associées (He, Ne, Ar and Kr) au travers de deux kaolinites, une smectite et un calcaire ont été évaluées dans les expériences. Les trois ensembles ont été fabriqués à partir de poudre commerciale pure saturée à l'eau (Aldrich, kaolinite 1), d'une kaolinite naturelle écrasée en poudre, d'une smectite naturelle de Libye également pulvérisée et d'un calcaire naturel originaire de la formation du Dogger du Bassin de Paris (France). Les caractéristiques des quatre expériences sont données en Tableau 1. Si on considère la migration des gaz rares comparée à celle du CO₂, il apparaît que le CO₂ est toujours le gaz dont le flux relatif est le plus abondant. Ceci est dû à sa grande solubilité comparée à celles des gaz rares, puisque la migration diffusive au travers d'une membrane saturée en eau est proportionnelle au produit de la solubilité par le coefficient de diffusion dans l'eau.

**Tableau 1**

| | porosité (%) | épaisseur (mm) | durée (jours) | SDF CO₂ | SDF He | SDF Ne | SDF Ar | SDF Kr | SDF Xe |
|---|---|---|---|---|---|---|---|---|---|
| kaolinite 1 | 45,8 | 8 | 64 | 0,18 | 0,24 | 0,20 | 0,040 | 0,008 | 0 |
| kaolinite 2 | 31,9 | 8 | 69 | 0,29 | 0,37 | 0,27 | 0,056 | 0,006 | 0 |
| smectite | 49 | 8,2 | 3 | 0,04 | 0,11 | 0,12 | 0,035 | 0,021 | 0 |
| carbonate | 25 | 5,9 | 38 | 0,21 | 0,63 | 0,59 | 0,35 | 0,070 | 0 |

### Modélisation 1D de l'expérience

Un modèle numérique a été développé (Schneider, F, Prinzhofer, A., Lopez, P., Oudin, J.L. & Pernaton E. "Would it be realistic to neglect gas diffusion in water as a migration process?"- EAPG, Glasgow, Scottland, 29 May-2 June 1995 (1995*)*) pour l'interprétation et la quantification du fractionnement élémentaire et isotopique des gaz lors de la migration à travers des sédiments compactés. Il s'agit d'un modèle mono dimensionnel prenant en compte: - les processus de diffusion (loi de Fick) dans un milieu saturé en eau, - les deux phases gaz qui encadrent ledit milieu, et - la solubilité (loi de Henry) de chaque molécule gazeuse entre une phase gaz et une phase aqueuse. Le paramètre sensible de l'expérience est le produit de la solubilité par le coefficient de diffusion divisé par l'épaisseur de la membrane poreuse. Les caractéristiques pétrophysiques de la membrane (porosité, tortuosité, diffusivité) sont intégrées dans le coefficient de diffusion effectif, correspondant au coefficient de diffusion dans l'eau pure multiplié par la porosité et par le facteur de ralentissement (SDF), qui inclut à la fois la tortuosité du réseau poreux et les interactions des molécules de gaz avec la surface des minéraux.

En ajustant les différents résultats expérimentaux, les SDF observés sont très différents entre le CO₂ et chaque gaz rare, indiquant à la fois l'influence de la tortuosité et d'une migration différentielle (Tableau 1). Pour une minéralogie donnée, l'hélium et le néon présentent le même retard. C'est probablement du aux faibles interactions de ces molécules avec les surfaces. Une valeur maximale pour les SDF peut être associée à la valeur de tortuosité puisqu'elles sont toujours les molécules les moins retenues et l'on peut considérer leur adsorption sur les matrices minérale comme négligeables. Le SDF du CO₂ est légèrement plus faible que ceux de l'hélium et du néon pour les expériences de kaolinite. Cependant, il semble qu'avec une matrice smectique, et encore plus pour une matrice carbonatée, le ralentissement est supérieur pour le CO₂ que pour les gaz rares légers, indiquant des interactions avec les minéraux environnants. Il est cependant impossible de savoir si le ralentissement est dû aux propriétés physiques ou à des interactions chimiques du CO₂ avec la smectite et le carbonate.

Pour les gaz rares lourds argon et krypton, la valeur de SDF est toujours plus faible, impliquant le phénomène d'adsorption des gaz rares qui augmente avec la masse moléculaire.

### Exemple géologique :

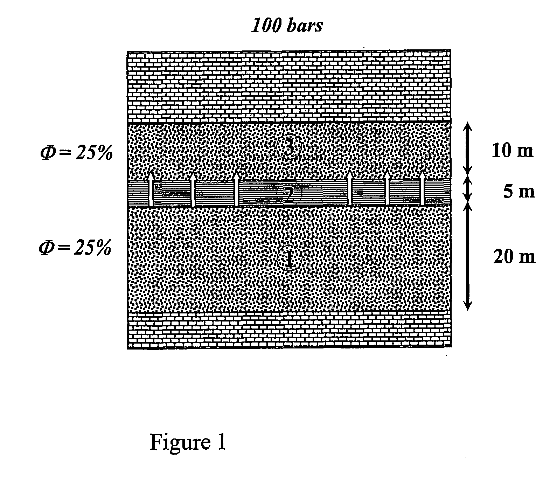

On utilise un modèle géologique simple pour représenter un stockage géologique de CO₂ (Figure 1). On représente un site de stockage 1 de 20 m d'épaisseur surmonté par 5 m d'épaisseur d'une roche de couverture 2. Au dessus de la couverture 2, le modèle présente un aquifère 3 où le CO₂ fuit à travers la roche de couverture sous-jacente. On suppose une pression de pore d'environ 100 bars (1000 m de profondeur si la pression est purement hydrostatique). Le CO₂ injecté est considéré avec une signature de gaz rares atmosphériques. Si les proportions relatives de gaz rares dans les injections futures de CO₂ seront très probablement proches des valeurs atmosphériques, leurs concentrations absolues peuvent être différentes, dû au processus de capture, et requerront des analyses préliminaires. Cela pourrait rendre les calculs encore plus sensibles aux migrations ascendantes de CO₂, où une signature de départ de gaz rares associés au CO₂ peut être prise en compte incluant l'injection artificielle de traceurs gaz rares. On considère que les porosités des deux aquifères sont de 25% (l'aquifère supérieur remplit par de l'eau équilibrée avec de l'air, l'aquifère inférieur l'étant par le CO₂ injecté). Pour la formation supérieure, l'aquifère utilisé dans les calculs est équilibré avec l'air (température de recharge 12°C), et la concentration de CO₂ prise en compte est celle obtenue à partir des valeurs mesurées dans l'aquifère du Dogger du Bassin de Paris (0,35 g/l de HCO₃⁻). De plus, cet exemple est centré sur l'utilisation des concentrations en gaz rares, sans aucune considération sur les rapports isotopiques. Dans le cas d'excès radiogéniques et/ou nucléogéniques dans l'aquifère où le CO₂ injecté, il sera plus simple d'utiliser les mêmes calculs sur les gaz rares conservatifs non radiogéniques (²⁰Ne, ³⁶Ar, ⁸⁴Kr and ¹³⁰Xe par exemple), ou bien sur les gaz rares ayant une faible contribution radiogénique (comme Ne, Kr ou Xe). Le statut de phase dans l'aquifère lors de la fuite de CO₂ n'est pas pris en compte, alors que l'on calcule simplement les rapports élémentaires des gaz rares associés. Il est clair qu'au début du processus de fuite, toutes les molécules sont en solution dans l'eau, alors que lorsqu'une large proportion de CO₂ a fui, une phase gaz est aussi présente dans l'aquifère. Cependant, les calculs représentent les rapports de gaz rares dans la zone aquifère, n'incluant pas la discussion sur la phase où ils s'accumulent.

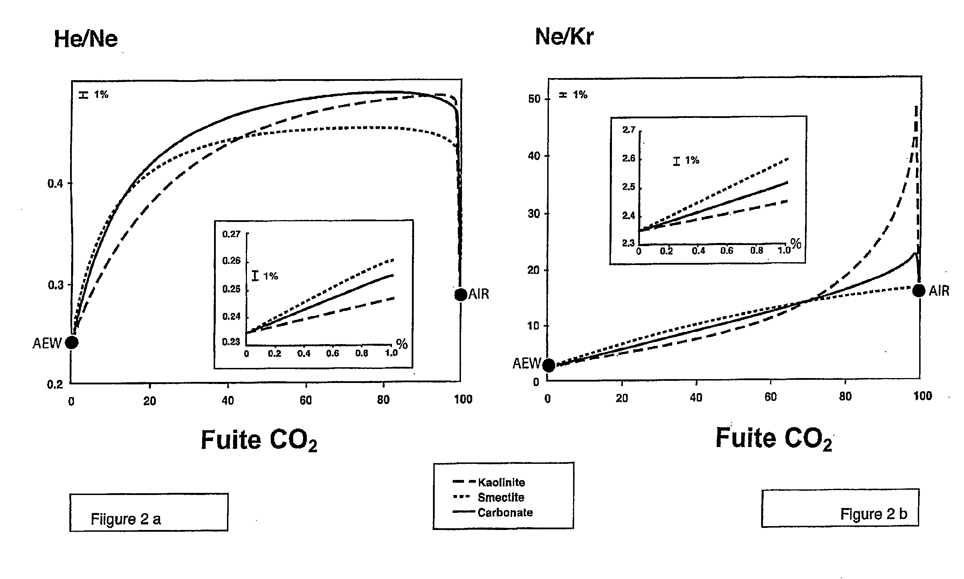

Les résultats majeurs obtenus sont les rapports de gaz rares par rapport à la production de CO₂, c'est-à-dire la variation de rapports élémentaires de gaz rares en fonction des proportions de CO₂ qui a fui à travers la couverture de faible perméabilité décrite dans les trois minéralogies basiques choisies (kaolinite, smectite et carbonate). Les rapports He/Ne en fonction de la production de CO₂ sont illustrées dans la figure 2a. On peut voir (figures 2a et 2b) que, sans aucune fuite, l'aquifère présente le rapport de gaz rares normal, équilibré à l'air, (avec une température d'équilibre de 12°C) soit 0,233 et 2,30 respectivement pour He/Ne et Ne/Kr). Pour une situation où 100% de CO₂ aurait fui dans l'aquifère, les mêmes rapports sont 0,288 et 15,5 respectivement, correspondant à peu près aux rapports atmosphériques avec une faible contribution de l'aquifère initial. On note que de larges excursions de ces rapports sont observées entre les valeurs de ces deux pôles (atteignant 0,49 et 48 pour He/Ne et Ne/Kr respectivement), dues aux flux de migration différentiels des différentes molécules de gaz rares. Ceci permet l'observation d'un très fort fractionnement de ces rapports pour de faibles proportions de fuites de CO₂, en considérant les incertitudes analytiques des concentrations de gaz rares. Une barre d'erreur de 1% est représentée, pour donner un ordre de grandeur de la sensibilité de la méthode. Quelle que soit la minéralogie choisie de la couverture, avec une telle précision de la quantification des rapports de gaz rares, une fuite au dessous de 0,1% du CO₂ initialement stocké apparaît pouvoir être positivement surveillée. En outre, il est important de noter que cette quantification est indépendante de la qualité intrinsèque de la couverture, c'est-à-dire du flux de fuite absolu de CO₂. En effet, ce dernier paramètre est très difficile à estimer précisément, de fait des hétérogénéités géologiques, non prises en compte dans la quantification réalisée à l'échelle du laboratoire. Néanmoins, cette méthode est une réelle technique de surveillance, libérée des incertitudes liées au temps de fuite.

Grâce aux résultats expérimentaux obtenus sur la migration du CO₂ associé au gaz rares à travers des roches de faible perméabilité, il est possible de mettre en oeuvre une technique pour quantifier les possibles fuites de CO₂ dans un aquifère sus-jacent. En considérant une précision analytique de 1% pour les mesures des rapports élémentaires de gaz rares, le contrôle de l'initiation d'une fuite en dessous de 0,1 % est faisable, avec différents rapports élémentaires de gaz rares en fonction de la minéralogie des couvertures. Le temps de fuite n'est pas un paramètre sensible dans ce calcul, qui est seulement basé sur les fuites relatives des différentes molécules de gaz l'une par rapport à l'autre (CO₂ et gaz rares). En utilisant des molécules de gaz rares contraintes (proportions initiales bien connues, pas d'implications dans des réactions chimiques ou biologiques), cette méthode permet de bien meilleurs résultats que des mesures directes des proportions de CO₂ dans l'eau, toujours sujettes aux transformations physico-chimiques, à l'altération et aux productions.

## Revendications

1. Méthode de surveillance d'un stockage géologique de CO₂, dans laquelle on effectue les étapes suivantes:
- on analyse les teneurs en CO₂ et en au moins deux gaz rares contenus dans un aquifère géologique surmontant la couverture d'un futur stockage de CO₂,
- on analyse les teneurs des deux gaz rares associés au CO₂ injecté,
- on caractérise les roches constituant ladite couverture et on modélise une fuite de CO₂ et des gaz rares provenant du stockage et traversant la couverture vers ladite couche géologique supérieure,
- on détermine un seuil d'au moins un rapport des deux gaz rares correspondant à un taux de fuite de CO₂,
- on mesure un rapport des deux gaz rares présents dans la couche géologique surmontant ledit stockage, et on compare audit seuil, et on détermine le taux de fuite de CO₂.

2. Méthode selon la revendication 1, dans laquelle on utilise au moins l'un des ratios de deux gaz rares suivants: He/Ne ou Ne/Kr.

3. Méthode selon la revendication 1, dans laquelle on utilise un traceur constitué de deux gaz rares, de rapports isotopiques normaux ou enrichis, que l'on mélange au CO₂ injecté.

4. Méthode selon l'une des revendications précédentes, dans laquelle les roches de la couverture sont caractérisées en cours de forage d'un puits d'injection de CO₂.

## Claims

1. A method of monitoring a geological CO₂ storage site, wherein the following stages are carried out:
- analyzing the proportions of CO₂ and of at least two rare gases contained in a geological aquifer overlying the caprock of a future CO₂ storage site,
- analyzing the proportions of the two rare gases associated with the CO₂ injected,
- characterizing the rocks making up said caprock and modelling a CO₂ and rare gas leak from the storage site, flowing through the caprock towards said upper geological layer,
- determining a threshold for at least one ratio of the two rare gases corresponding to a CO₂ leak rate,
- measuring a ratio of the two rare gases present in the geological layer overlying said storage site, comparing it with said threshold and determining the CO₂ leak rate.

2. A method as claimed in claim 1, wherein at least one of the following ratios of two rare gases is used: He/Ne or Ne/Kr.

3. A method as claimed in claim 1, wherein a tracer consisting of two rare gases, with normal or enriched isotopic ratios, mixed with the CO₂ injected, is used.

4. A method as claimed in any one of the previous claims, wherein the caprocks are characterized during drilling of a CO₂ injection well.

## Patentansprüche

1. Verfahren zur Überwachung eines geologischen CO₂-Speichers, bei welchem die folgenden Schritte durchgeführt werden:
- Analysieren der Gehalte an CO₂ und an mindestens zwei Edelgasen, die in einem geologischen Grundwasserleiter enthalten sind, welcher über der Abdeckung eines zukünftigen CO₂-Speichers liegt,
- Analysieren der Gehalte der beiden Edelgase, wie sie in Verbindung mit dem eingeleiteten CO₂ auftreten,
- Charakterisieren des Gesteins, aus dem die Abdeckung besteht, und Erstellen eines Modells eines Entweichens von CO₂ und der Edelgase, die aus dem Speicher stammen und die Abdeckung in Richtung der oberen geologischen Schicht durchdringen,
- Bestimmen eines Schwellenwerts für mindestens ein Verhältnis der beiden Edelgase, das einem Anteil an entweichendem CO₂ entspricht,
- Messen eines Verhältnisses der beiden Edelgase, die in der geologischen Schicht vorliegen, welche über dem Speicher liegt, und Vergleichen mit dem Schwellenwert, und Bestimmen des Anteils an entweichendem CO₂.

2. Verfahren nach Anspruch 1, wobei mindestens eines der Verhältnisse der beiden folgenden Edelgase verwendet wird: He/Ne oder Ne/Kr.

3. Verfahren nach Anspruch 1, wobei ein Markierungsstoff verwendet wird, der aus zwei Edelgasen mit normalen oder angereicherten Isotopenverhältnissen besteht, welche dem eingeleiteten CO₂ beigemischt werden.

4. Verfahren nach einem der vorhergehenden Ansprüche, wobei das Gestein der Abdeckung im Laufe des Bohrens eines CO₂-Einleitungsschachts charakterisiert wird.
